# EUROPEAN PATENT APPLICATION

(11) **EP 2 316 607 A1**
(43) Date of publication of application: **04.05.2011**
(21) Application number: 10188482.3
(22) Date of filing: 22.10.2010
(51) Int. Cl.: B23K 33/00, B23K 15/00, B23K 26/26, B23K 26/32

(54) **Workpiece with channel and process of welding for preventing porosity in a formed weld**

(30) Priority: 27.10.2009 US 606759
(71) Applicant: General Electric Company, Schenectady, NY 12345 (US)
(72) Inventor: Nowak, Daniel A., Greenville, SC 29607 (US); Johnston, Bill D., Easley, SC 29640 (US); Myers, Melbourne J., Duncan, SC 29334 (US); Brown, Joe T., Simpsonville, SC 29681 (US)
(74) Representative: Gray, Thomas

(57) **Abstract**

The present application relates to an article (100) for electron beam (700) or laser (800) welding, which includes a workpiece (102) including a weld surface (114), wherein the weld surface (114) has at least one porosity reducing channel (116) configured to reduce porosity in a formed weld (112). The present application relates also to a process of welding such article (100).

## Description

### FIELD OF THE INVENTION

The present disclosure generally relates to weldable workpieces and welding processes. In particular, the present disclosure relates to workpieces and welding processes that prevent the formation of pores in welds.

### BACKGROUND OF THE INVENTION

Structures and articles are continuously being designed and produced to be larger, to be more complex, and to have increased strength. Often, weld points are one of the weaker parts of such structures and articles.

Generally, welds secure two workpieces together. For example, a first workpiece may be secured to a second workpiece thereby forming a desired structure, article, or part of a structure or article. The welded workpieces may be subjected to numerous physical forces. For example, welded workpieces may experience compressive and tensile forces as a structure sways. In addition, physical forces may result from other factors, including but not limited to, environmental effects, operational effects, and/or exposure to changing conditions. If a weld is unsuccessful, the parts may be more susceptible to failure. For example, physical forces can produce fatigue loading on structures having welded parts. This fatigue can result in failure of the weld and failure of the structure.

Generally, welds can be formed by partially melting workpieces and optionally adding a filler material that cools to become a joint. The partial melting of the workpieces and/or the filler material requires energy. The energy can be provided by a gas flame, an electric arc, a laser, an electron beam, friction, ultrasound, or other suitable sources of energy.

Electron beam welding and laser beam welding can have a smaller heat-affected zone than other welding methods permitting focused energy, reduced distortion, and rapid cooling. However, electron beam welding and laser beam welding can emit gases. To reduce or eliminate the gases, deoxidizers (which reduce or remove oxygen content in metal) can be used. The deoxidizer can reduce or eliminate weld porosity, which may reduce the strength of the weld. Exclusively using deoxidizer for reducing or eliminating weld porosity can provide compositional limitations on workpieces.

### SUMMARY OF THE INVENTION

In an exemplary embodiment, an article for a welding process includes a workpiece, the workpiece including a first weld surface, the first weld surface including at least one porosity reducing channel, the at least one porosity reducing channel being configured to prevent the formation of pores in a formed weld.

In another exemplary embodiment, an article for welding includes a workpiece, the workpiece includes a first weld surface, the first weld surface including at least one porosity reducing channel, the at least one porosity reducing channel being configured to direct gas from the weld surface when a weld is being formed.

In another exemplary embodiment, a welding process includes positioning a first workpiece, the first workpiece including a first weld surface, the first weld surface including at least one porosity reducing channel, positioning a second workpiece, the second workpiece including a second weld surface, the second weld surface being positioned to be welded to the first weld surface, and applying energy to the first weld surface and the second weld surface thereby forming a weld, the application of energy generating gas, the gas being directed by the at least one porosity reducing channel. In the embodiment, the welding process includes at least one of an electron beam welding process or a laser welding process.

### BRIEF DESCRIPTION OF THE DRAWINGS

There follows a detailed description of embodiments of the invention by way of example only with reference to the accompanying drawings, in which:
FIG. 1 shows a perspective view of workpieces positioned to be welded according to an exemplary embodiment.
FIG. 2 shows a transverse view of prior art workpieces welded together.
FIG. 3 shows a transverse view of workpieces welded together according to an exemplary embodiment.
FIG. 4 shows a perspective view of a workpiece according to an exemplary embodiment.
FIG. 5 shows a perspective view of a workpiece according to another exemplary embodiment.
FIG. 6 shows a perspective view of a workpiece according to yet another exemplary embodiment.
FIG. 7 shows perspective view of an exemplary embodiment of an article being welded according to an exemplary embodiment.
FIG. 8 shows perspective view of another exemplary embodiment of an article being welded according to another exemplary embodiment.

Wherever possible, the same reference numbers will be used throughout the drawings to represent the same parts.

### DETAILED DESCRIPTION OF THE INVENTION

Provided is an exemplary embodiment of a weldable workpiece and a method for welding workpieces that prevents the formation of pores in welds. The prevention of the formation of pores in welds is additional or alternative to prevention achieved by including deoxidizer in the composition of the workpiece. Embodiments may improve weld quality, may prevent porosity in welds, may direct gases emitted from laser welding and/or electron beam welding, and/or may be an alternative to including deoxidizer in workpiece composition.

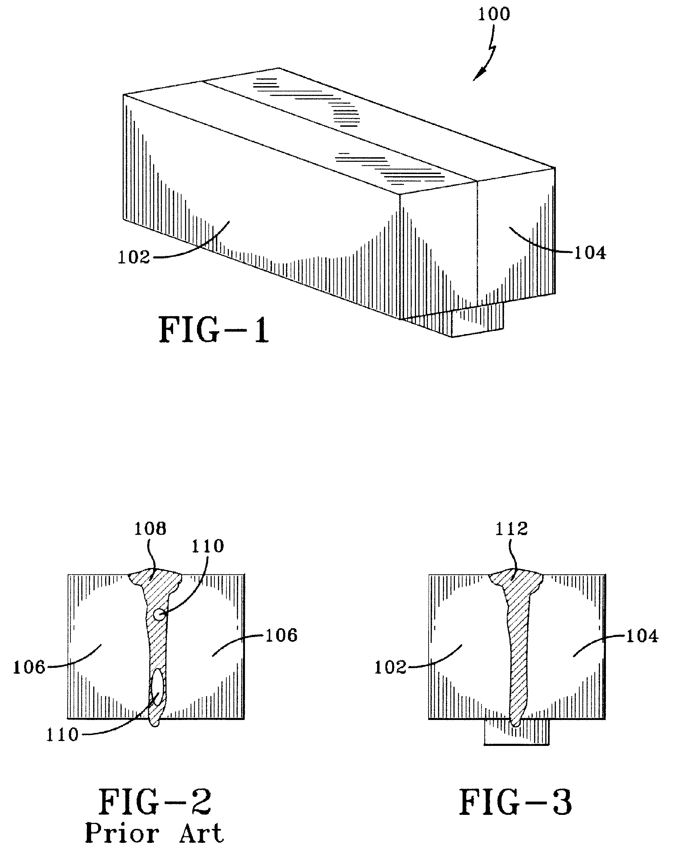

As shown in FIG. 1, an article 100 for high energy welding (for example, electron beam or laser welding) can include a first workpiece 102 and a second workpiece 104. Optionally, a backer block may be positioned beneath first workpiece 102 and second workpiece 104 thereby preventing outgassing from the bottom of first workpiece 102 and second workpiece 104, thus, decreasing porosity. First workpiece 102 and second workpiece 104 can be welded to form article 100. Referring to FIG. 2, welding prior art workpieces 106 can form a porous weld 108. Porous weld 108 includes pores 110 that can reduce the strength and/or durability of the weld. Pores 110 in the weld are undesirable and can decrease weld strength.

Referring to FIG. 3, according to an exemplary embodiment of the disclosure welding first workpiece 102 to second workpiece 104 can form a weld 112 with few or no pores according to an exemplary embodiment of the disclosure. Thus, the first workpiece 102 and second workpieces 104 can prevent the formation of pores. Workpieces 102, 104 can be made of any material suitable for welding, can be of any design or shape suitable for welding, and can include additional workpieces or be part of additional workpieces. Workpieces 102, 104 can be of the same material or different material. Workpieces 102, 104 can have varying levels of compositional impurities and/or contaminants including, but not limited to, air or other gaseous products produced during welding.

In one exemplary embodiment, workpieces 102, 104 may include deoxidizers or other suitable additives. Deoxidizers may be fluxes or active shield gases, or other suitable additives.

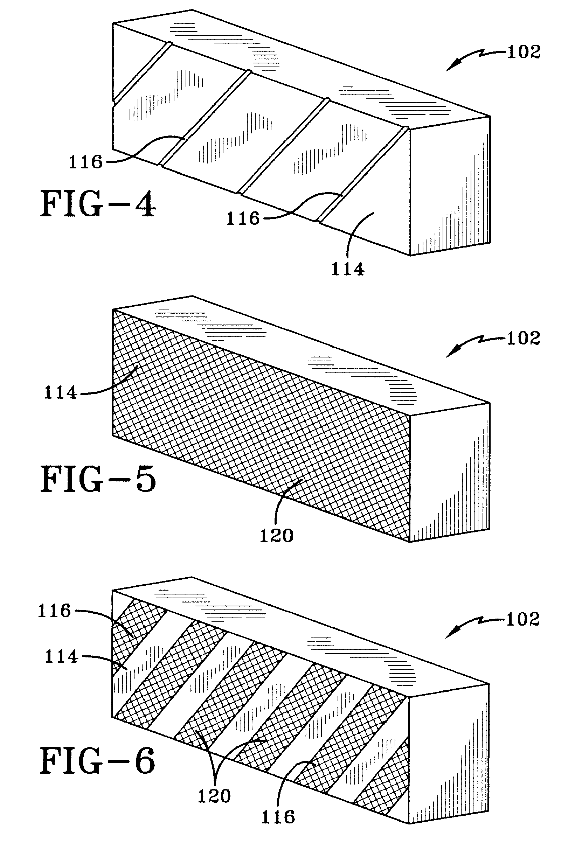

Referring to FIGS. 4-6, first workpiece 102 and/or second workpiece 104 can include a weld surface 114. Weld surfaces 114 of workpieces 102, 104 can be positioned to be welded to generate a formed weld. Optionally, a filler material provided by a wire feed or other suitable feed may be used in forming the weld. Weld surface 114 can include at least one porosity reducing channel 116. Porosity reducing channel 116 can reduce porosity in the formed weld. In one embodiment, porosity reducing channel(s) 116 of first workpiece 102 may correspond with porosity reducing channel(s) 116 of second workpiece 104. For example, porosity reducing channel(s) 116 on first workpiece 102 may line up with porosity reducing channel(s) 116 of second workpiece 104 to form a larger channel. Additionally or alternatively, porosity reducing channel(s) 116 on first workpiece 102 may be staggered in comparison to porosity reducing channel(s) 116 of second workpiece 104. Other suitable corresponding relationships between porosity reducing channel(s) 116 on first workpiece 102 and porosity reducing channel(s) 116 of second workpiece 104 may additionally or alternatively be included.

Porosity reducing channels 116 in first workpiece 102, second workpiece 104, and/or combinations thereof can depend upon the material from which the workpiece is made, the thickness of the workpiece, a predetermined vacuum level, properties of a predetermined filler material (for example, melt temperature, viscosity when melted, amount of gas emitted during weld, etc.), an amount of air in the material, a predetermined energy level, and/or a predetermined welding travel speed. Workpieces 102, 104 made of a material that generates a larger amount of gas when being laser welded or electron beam welded may include more and/or larger porosity reducing channels 116. In contrast, workpieces 102, 104 made from a material that generates a smaller amount of gas when being laser welded or electron beam welded may include fewer and/or smaller porosity reducing channels 116. Workpieces 102, 104 having a larger thickness may include more and/or larger porosity reducing channels 116. In contrast, workpieces 102, 104 having a smaller thickness may include fewer and/or smaller porosity reducing channels 116. Workpieces 102, 104 to be welded in a higher vacuum may include fewer and/or smaller porosity reducing channels 116. ln contrast, workpieces 102, 104 to be welded in a lower vacuum (or in no vacuum) may include greater and/or larger porosity reducing channels 116. Workpieces 102, 104 to be welded with a higher viscosity and/or higher gas generating filler material may include more and/or larger porosity reducing channels 116. In contrast, workpieces 102, 104 to be welded with a lower viscosity and/or lower gas generating filler may include fewer and/or smaller porosity reducing channels 116. Workpieces 102, 104 having a higher concentration of air in the metal may include fewer and/or smaller porosity reducing channels 116. In contrast, workpieces 102, 104 having a lower concentration of air in the metal may include more and/or larger porosity reducing channels 116. Workpieces 102, 104 to be welded at a higher amount of energy may include fewer and/or smaller porosity reducing channels 116. In contrast, workpieces 102, 104 to be welded at a lower amount of energy may include more and/or larger porosity reducing channels 116. Workpieces 102, 104 to be welded at a slower weld travel speed may include fewer and/or smaller porosity reducing channels 116. In contrast, workpieces 102, 104 to be welded at a higher weld travel speed may include more and/or larger porosity reducing channels 116. However, depending upon the specific workpieces 102, 104, the amount, size, and/or orientation of porosity reducing channels 116, porosity reducing channels 116 can be affected by the above properties to varying degrees or even in the reverse.

Referring to FIGS. 5 and 6, porosity reducing channel(s) 116 can include a knurled surface 120. Additionally or alternatively, knurled surface 120 may form less defined porosity reducing channels 116 (see FIG. 6). The depth of knurls in knurled surface 120 can include a predetermined depth, size, and/or number. Knurled surface 120 can be varied to achieve desired properties depending upon the material from which the workpiece is made, the thickness of the workpiece, a predetermined vacuum level, properties of a predetermined filler material (for example, melt temperature, viscosity when melted, amount of gas emitted during weld, etc.), a predetermined energy level, and/or a predetermined welding travel speed. For example, workpieces 102, 104 may vary in size, number, and/or depth of knurled surface(s) 120 based upon the specific properties of workpieces 102, 104.

Knurled surface 120 in first workpiece 102, second workpiece 104, and/or combinations thereof can depend upon the material from which the workpiece is made, the thickness of the workpiece, a predetermined vacuum level, properties of a predetermined filler material, an amount of air in the material, a predetermined energy level, and/or a predetermined welding travel speed. Workpieces 102, 104 made of a material that generates a larger amount of gas when being laser welded or electron beam welded may include larger, more, and/or deeper knurled surfaces 120. In contrast, workpieces 102, 104 made of a material that generates a smaller amount of gas when being laser welded or electron beam welded may include fewer, smaller, and/or shallower knurled surfaces 120. Workpieces 102, 104 having a larger thickness may include larger, more, and/or deeper knurled surfaces 120. In contrast, workpieces 102, 104 having a smaller thickness may include smaller, fewer and/or shallower knurled surfaces 120. Workpieces 102, 104 to be welded in a higher vacuum may include smaller, fewer and/or shallower knurled surfaces 120. In contrast, workpieces 102, 104 to be welded in a lower vacuum (or in no vacuum) may include larger, more, and/or deeper knurled surfaces 120. Workpieces 102, 104 to be welded with a higher viscosity and/or higher gas generating filler material may include larger, more, and/or deeper knurled surfaces 120. In contrast, workpieces 102, 104 to be welded with a lower viscosity and/or lower gas generating filler may include smaller, fewer, and/or shallower knurled surfaces 120. Workpieces 102, 104 having a higher concentration of air in the metal may include smaller, fewer, and/or shallower knurled surfaces 120. In contrast, workpieces 102, 104 having a lower concentration of air in the metal may include smaller, fewer, and/or shallower knurled surfaces 120. Workpieces 102, 104 to be welded at a higher amount of energy may include smaller, fewer, and/or shallower knurled surfaces 120. In contrast, workpieces 102, 104 to be welded at a lower amount of energy may include larger, more, and/or deeper knurled surfaces 120. Workpieces 102, 104 to be welded at a slower weld travel speed may include smaller, fewer, and/or shallower knurled surfaces 120. In contrast, workpieces 102, 104 to be welded at a higher weld travel speed may include larger, more, and/or deeper knurled surfaces 120. However, depending upon the specific workpieces 102, 104, the amount, size, depth, and/or orientation of knurled surface(s) 120 can be affected by the above properties to varying degrees or even in the reverse.

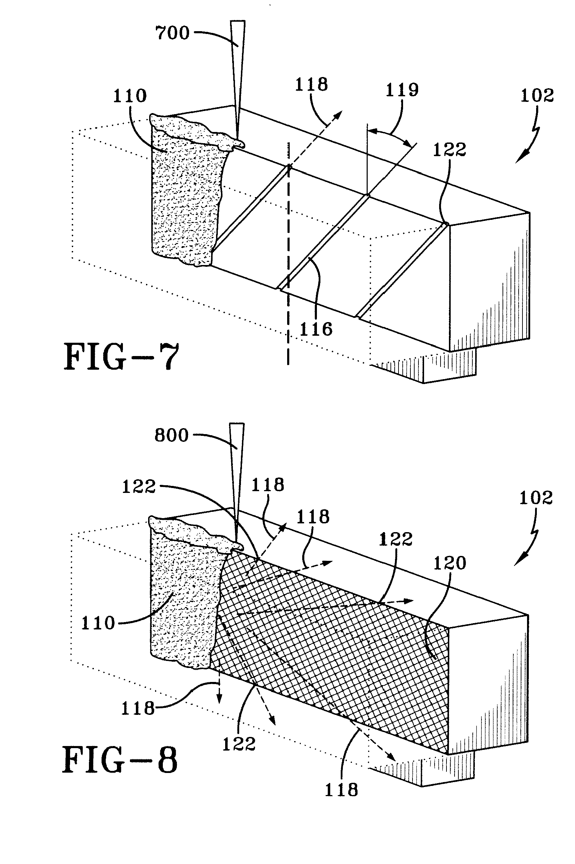

Referring to FIG. 7, porosity reducing channel(s) 116 and/or knurled surface 120 can include a vent path 118 extending to a predetermined edge 122. Vent path 118 can include an angle 119, length, and degree of tortuousness (as used herein, the term "tortuousness" refers to serpentine nature with a high degree being very much serpentine and a low degree being perfectly straight) depending upon the material from which the workpiece is made, the thickness of the workpiece, a predetermined vacuum level, properties of a predetermined filler material (for example, melt temperature, viscosity when melted, amount of gas emitted during weld, etc.), a predetermined energy level, and/or a predetermined welding travel speed.

Vent path 118 in first workpiece 102, second workpiece 104, and/or combinations thereof can depend upon the material from the workpiece is made, the thickness of the workpiece, a predetermined vacuum level, properties of a predetermined filler material, an amount of air in the material, a predetermined energy level, and/or a predetermined welding travel speed. Workpieces 102, 104 made from a material that generates a larger amount of gas when being laser welded or electron beam welded may include a vent path 118 having a smaller angle 119, shorter length, and lower degree of tortuousness. In contrast, workpieces 102, 104 made from a material that generates a smaller amount of gas when being laser welded or electron beam welded may include a vent path 118 having a greater angle 119, longer length, and higher degree of tortuousness. Workpieces 102, 104 having a larger thickness may include a vent path 118 having a smaller angle 119, shorter length, and lower degree of tortuousness. In contrast, workpieces 102, 104 having a smaller thickness may include a vent path 118 having a greater angle 119, longer length, and higher degree of tortuousness. Workpieces 102, 104 to be welded in a higher vacuum may include a vent path 118 having a greater angle 119, longer length, and higher degree of tortuousness. In contrast, workpieces 102, 104 to be welded in a lower vacuum (or in no vacuum) may include a vent path 118 having a smaller angle 119, shorter length, and lower degree of tortuousness. Workpieces 102, 104 to be welded with a higher viscosity and/or higher gas generating filler material may include a vent path 118 having a smaller angle 119, shorter length, and lower degree of tortuousness. In contrast, workpieces 102, 104 to be welded with a lower viscosity and/or lower gas generating filler may include a vent path 118 having a greater angle 119, longer length, and higher degree of tortuousness. Workpieces 102, 104 having a higher concentration of air in the metal may include a vent path 118 having a greater angle 119, longer length, and higher degree of tortuousness. In contrast, workpieces 102, 104 having a lower concentration of air in the metal may include a vent path 118 having a smaller angle 119, shorter length, and lower degree of tortuousness. Workpieces 102, 104 to be welded at a higher amount of energy may include a vent path 118 having a greater angle 119, longer length, and higher degree of tortuousness. In contrast, workpieces 102, 104 to be welded at a lower amount of energy may include a vent path 118 having a smaller angle 119, shorter length, and lower degree of tortuousness. Workpieces 102, 104 to be welded at a slower weld travel speed may include a vent path 118 having a greater angle 119, longer length, and higher degree of tortuousness. In contrast, workpieces 102, 104 to be welded at a higher weld travel speed may include a vent path 118 having a smaller angle 119, shorter length, and lower degree of tortuousness. However, depending upon the specific workpieces 102, 104, the angle 119, length, and/or degree of tortuousness can be affected by the above properties to varying degrees or even in the reverse.

Referring to FIG. 7, porosity reducing channel(s) 116 can include a vent profile comprising a plurality of vent paths 118 extending to a plurality of edges 122 along angle 119, and/or a plurality of vent paths 118. The vent profile, vent paths 118, angle 119, knurled surface(s) 120, and/or porosity reducing channel(s) 116 can be of dimensions corresponding to a predetermined welding travel speed and a predetermined weld path. For example, in one embodiment, the vent profile of FIG. 7 may be configured for welding by an electron beam 700.

Referring to FIG. 8, porosity reducing channel(s) 116 can include a different vent profile comprising a plurality of vent paths 118 extending to a plurality of edges 122 in a plurality of directions, and/or a plurality of vent paths 118. The vent profile, vent paths 118, knurled surface(s) 120, and/or porosity reducing channel(s) 116 can be of dimensions corresponding to a predetermined welding travel speed and a predetermined weld path. For example, in one embodiment, the vent profile of FIG. 8 may be configured for welding by a laser 800. In one embodiment, vent profile, vent paths 118, knurled surface(s) 120, and/or porosity reducing channel(s) 116 permit substantially continuous directing of gases during the welding process.

According to an exemplary embodiment, welding may be performed by positioning first workpiece 102 and second workpiece 104 or a workpiece 106 devoid of porosity reducing channels 116 or knurled surfaces 120, applying energy to first weld surface 116 of first workpiece 102 and a second weld surface of second workpiece 104 or prior art workpiece 106 can form a weld with reduced porosity by directing gases with porosity reducing channel and/or knurled surface 120 away from weld 112.

While the disclosure has been described with reference to a preferred embodiment, it will be understood by those skilled in the art that various changes may be made and equivalents may be substituted for elements thereof without departing from the scope of the disclosure. In addition, many modifications may be made to adapt a particular situation or material to the teachings of the disclosure without departing from the essential scope thereof. Therefore, it is intended that the disclosure not be limited to the particular embodiment disclosed as the best mode contemplated for carrying out this disclosure, but that the disclosure will include all embodiments falling within the scope of the appended claims.

For completeness, various aspects of the invention are now set out in the following numbered clauses:
1. An article for a welding process, the article comprising:
   a workpiece, the workpiece comprising a first weld surface, the first weld surface comprising at least one porosity reducing channel, the at least one porosity reducing channel being configured to prevent the formation of pores in a formed weld.
2. The article of clause 1, comprising a second workpiece, the second workpiece comprising a second weld surface, the second weld surface being positioned to be welded to the first weld surface to generate the formed weld.
3. The article of clause 2, wherein the second workpiece comprises at least one corresponding porosity reducing channel, the at least one corresponding porosity reducing channel corresponding to the at least one porosity reducing channel of the first workpiece.
4. The article of clause 1, wherein the welding process is at least one of a laser beam welding process or an electron beam welding process.
5. The article of clause 1, wherein the at least one porosity reducing channel comprises a vent path extending to a predetermined edge.
6. The article of clause 1, wherein the first weld surface includes knurls.
7. The article of clause 6, wherein the knurls of the first weld surface include a predetermined depth corresponding to the material from which the workpiece is made and the thickness of the workpiece.
8. The article of clause 6, wherein the knurls of the first weld surface include a predetermined depth corresponding to a predetermined vacuum level for generating the formed weld.
9. The article of clause 1, wherein the at least one porosity reducing channel includes dimensions corresponding to a predetermined welding travel speed and a predetermined weld path.
10. The article of clause 1, wherein the at least one porosity reducing channel comprises a vent path extending to a predetermined edge in a portion of the first weld surface and is knurled in a second portion.
11. An article for welding, the article comprising:
   a workpiece, the workpiece comprising a first weld surface, the first weld surface comprising at least one porosity reducing channel, the at least one porosity reducing channel being configured to direct gas from the weld surface when a weld is being formed.
12. The article of clause 11, comprising a second workpiece, the second workpiece comprising a second weld surface, the second weld surface being positioned to be welded to the first weld surface to generate the formed weld.
13. The article of clause 12, wherein the second workpiece comprises at least one corresponding porosity reducing channel, the corresponding porosity reducing channel corresponding to the at least one porosity reducing channel of the first workpiece.
14. The article of clause 11, wherein the at least one porosity reducing channel comprises a vent path extending to a predetermined edge.
15. The article of clause 11, wherein the first weld surface is knurled and includes a predetermined depth corresponding to the material from which the workpiece is made and the thickness of the workpiece.
16. The article of clause 11, wherein the first weld surface is knurled and includes a predetermined depth corresponding to a predetermined vacuum level for generating the formed weld.
17. The article of clause 11, wherein the at least one porosity reducing channel includes dimensions corresponding to a predetermined welding travel speed and a predetermined weld path.
18. A welding process, the process comprising:
   positioning a first workpiece, the first workpiece comprising a first weld surface, the first weld surface comprising at least one porosity reducing channel;
   positioning a second workpiece, the second workpiece comprising a second weld surface, the second weld surface being positioned to be welded to the first weld surface; and
   applying energy to the first weld surface and the second weld surface thereby forming a weld, the application of energy generating gas, the gas being directed by the at least one porosity reducing channel; and,
   wherein the welding process comprises at least one of an electron beam welding process or a laser welding process.
19. The process of claim 18, comprising scoring the first workpiece prior to positioning the first workpiece.
20. The article of claim 18, wherein the application of energy to the first weld surface and the second weld surface is performed at a predetermined travel speed along a predetermined travel path corresponding to dimensions of the at least one porosity reducing channel.

## Claims

1. An article (100) for a welding process, the article (100) comprising:
a workpiece (102), the workpiece (102) comprising a first weld surface (114), the first weld surface (114) comprising at least one porosity reducing channel (116), the at least one porosity reducing channel (116) being configured to prevent the formation of pores in a formed weld (112).

2. The article (100) of claim 1, comprising a second workpiece (104), the second workpiece (104) comprising a second weld surface (114), the second weld surface (114) being positioned to be welded to the first weld surface (114) to generate the formed weld (112).

3. The article (100) of claim 2, wherein the second workpiece (104) comprises at least one corresponding porosity reducing channel (116), the at least one corresponding porosity reducing channel (116) corresponding to the at least one porosity reducing channel (116) of the first workpiece (102).

4. The article (100) of any of the preceding claims, wherein the welding process comprises at least one of a laser beam (800) welding process or an electron beam (700) welding process.

5. The article (100) of any of the preceding claims, wherein the at least one porosity reducing channel (116) comprises a vent path (118) extending to a predetermined edge (122).

6. The article (100) of any of the preceding claims, wherein the first weld surface (114) includes knurls (120).

7. The article (100) of claim 6, wherein the knurls (120) of the first weld surface (114) include a predetermined depth corresponding to the material from which the workpiece (102) is made and the thickness of the workpiece (102).

8. The article (100) of claim 6, wherein the knurls (120) of the first weld surface (114) include a predetermined depth corresponding to a predetermined vacuum level for generating the formed weld (112).

9. The article (100) of any of the preceding claims, wherein the at least one porosity reducing channel (116) includes dimensions corresponding to a predetermined welding travel speed and a predetermined weld path.

10. The article (100) of any of the preceding claims, wherein the at least one porosity reducing channel (116) comprises a vent path (118) extending to a predetermined edge (122) in a portion of the first weld surface (114) and is knurled in a second portion (116).

11. A welding process, the process comprising:
positioning a first workpiece, the first workpiece comprising a first weld surface, the first weld surface comprising at least one porosity reducing channel;
positioning a second workpiece, the second workpiece comprising a second weld surface, the second weld surface being positioned to be welded to the first weld surface; and
applying energy to the first weld surface and the second weld surface thereby forming a weld, the application of energy generating gas, the gas being directed by the at least one porosity reducing channel; and,
wherein the welding process comprises at least one of an electron beam welding process or a laser welding process.

12. The process of claim 11, comprising scoring the first workpiece prior to positioning the first workpiece.

13. The article of claim 11, wherein the application of energy to the first weld surface and the second weld surface is performed at a predetermined travel speed along a predetermined travel path corresponding to dimensions of the at least one porosity reducing channel.
